# EUROPÄISCHE PATENTSCHRIFT

(11) **EP 3 837 310 B1**
(45) Veröffentlichungstag und Bekanntmachung des Hinweises auf die Patenterteilung: **05.10.2022**
(21) Anmeldenummer: 19752167.7
(22) Anmeldetag: 06.08.2019
(51) Int. Cl.: C08K 5/372, C08K 5/548, C08L 9/00, C08L 9/06

(54) **KAUTSCHUKMISCHUNGEN**
RUBBER MIXTURES
MÉLANGES DE CAOUTCHOUC

(30) Priorität: 16.08.2018 DE 102018213774
(43) Veröffentlichungstag der Anmeldung: 23.06.2021
(73) Patentinhaber: Evonik Operations GmbH, 45128 Essen (DE)
(72) Erfinder: WEHMEIER, André, 50996 Köln (DE); RÖBEN, Caren, 45133 Essen (DE); ERHARDT, Sascha, 79618 Rheinfelden (DE); HERMEKE, Julia, 70839 Gerlingen (DE); MOSER, Ralph, San Diego, CA 92116 (US); BAUER, Elisabeth, 79692 Kleines Wiesental (DE); ROSENSTINGL, Sebastian, 79539 Lörrach (DE); MAYER, Stefanie, 79618 Rheinfelden (DE)
(74) Vertreter: Evonik Patent Association
(86) Internationale Anmeldenummer: PCT/EP2019/071109
(87) Internationale Veröffentlichungsnummer: WO 2020/035353

(56) Entgegenhaltungen:
- EP-A1- 1 285 926
- WO-A1-2012/092062

## Beschreibung

Die vorliegende Erfindung betrifft Kautschukmischungen, ein Verfahren zu deren Herstellung sowie deren Verwendung.

Aus EP 1285926, EP 1683801 und EP 1829922 sind Mercaptosilane bzw. polysulfidische Silane mit Polyethergruppen bekannt.

Ferner ist aus "Si 266^{®} as processing aid for VP Si 363^{®}" bekannt, dass durch die Zugabe von Si 266^{®} die Mooney Viskosität und das Mooney Scorch Verhalten verbessert werden kann.

Nachteile der bekannten Kautschukmischungen, enthaltend die Silanmischungen, sind die schlechteren dynamischen Eigenschaften und der geringere Abriebwiderstand.

Aufgabe der Erfindung ist es, Kautschukmischungen mit Silanmischungen herzustellen, die verbesserte dynamische Eigenschaften und einen verbesserten Abriebwiderstand aufweisen.

Gegenstand der Erfindung sind Kautschukmischungen, welche dadurch gekennzeichnet sind, dass diese mindestens einen Kautschuk, mindestens ein Mercaptosilan der allgemeinen Formel I,

R¹₃Si-R²-S-R³ I,

und mindestens eine Mischung von Polysulfanen der Formel II

R¹₃Si-R²-Sₓ-R²-SiR¹₃ II

enhalten,
wobei R¹ gleich oder verschieden und eine Alkylpolyethergruppe -O-(R⁴-O)ₘ-R⁵,
C1-C12-Alkyl- oder R⁶O-Gruppe ist, vorzugsweise kann mindestens eine R¹ Gruppe des Mercaptosilan der allgemeinen Formel I eine Alkylpolyethergruppe -O-(R⁴-O)ₘ-R⁵ sein,
R² eine verzweigte oder unverzweigte, gesättigte oder ungesättigte, aliphatische, aromatische oder gemischt aliphatische /aromatische zweibindige C1-C30 Kohlenwasserstoffgruppe, vorzugsweise (CH₂)₃-Gruppe, und
R³ gleich H, CN oder (C=O)-R⁷ ist,
mit R⁴ gleich oder verschieden, eine verzweigte oder unverzweigte aliphatische zweibindige C1-C30 Kohlenwasserstoffgruppe, vorzugsweise C2-C3, besonders bevorzugt CH₂CH₂, m 1 bis 30, vorzugsweise 2-10, besonders bevorzugt 5, ist,
R⁵ aus mindestens 1 C-Atomen besteht und eine unsubstituierte oder substituierte, verzweigte oder unverzweigte einbindige Alkyl-, Alkenyl, Aryl oder Aralkylgruppe, vorzugsweise C1-C15-Alkylgruppe, besonders bevorzugt C7-C15-Alkylgruppe, ganz besonders bevorzugt C₁₃H₂₇-Alkylgruppe, ist,
R⁶ gleich H, C1-C30 verzweigten oder unverzweigten einbindigen Alkyl-, vorzugsweise Methyl, Ethyl oder Propyl, insbesondere bevorzugt Ethyl, Alkenyl-, Aryl- oder Aralkylgruppe ist,
R⁷ gleich C1-C30 verzweigten oder unverzweigten einbindigen Alkyl-, vorzugsweise Methyl, Ethyl, Propyl, Heptyl oder Octyl, Alkenyl-, Aryl- oder Aralkylgruppe ist, und
x eine ganze Zahl von 2 bis 10 ist, den Anteil der Polysulfanen bei denen x=2 ist einen Wert von mindestens 90 Gew.-%, vorzugsweise 92-98 Gew.-%, besonders bevorzugt 93-98 Gew.-%, bezogen auf die Gesamtmenge der Polysulfane mit x=2 bis 10, erreicht.

Die Mischung von Polysulfanen der Formel II kann einen Anteil der Polysulfanen bei denen x=3 ist einen Wert von höchstens 10 Gew.-%, vorzugsweise von höchstens 8 Gew.-%, bezogen auf die Gesamtmenge der Polysulfane mit x=2 bis 10, erreichen.

Der Kautschuk kann vorzugsweise ein Dienkautschuk sein.

Silane der allgemeinen Formel I können

(C₁₃H₂₇-(OCH₂CH₂)₅-O-)₃ Si-(CH₂)₃-SH,

(C₁₃H₂₇-(OCH₂CH₂)₅-O-)₂ (CH₃CH₂O-) Si-(CH₂)₃-SH,

(C₁₃H₂₇-(OCH₂CH₂)₅-O-) (CH₃CH₂O-)₂ Si-(CH₂)₃-SH,

(CH₃CH₂O-)₃ Si-(CH₂)₃-SH,

(CH₃O-)₃ Si-(CH₂)₃-SH oder

Mischungen der vorgenannten Silane der allgemeinen Formel I sein. Mercaptosilane der allgemeinen Formel I können auch Oligomere oder Polymere der Mercaptosilane der allgemeinen Formel I enthalten.

Polysulfane der allgemeinen Formel II können sein:
(CH₃CH₂₀)₃Si-(CH₂)₃-Sₓ-(CH₂)₃-Si(OCH₂CH₃)₃ oder (CH₃O)₃Si-(CH₂)₃-Sₓ-(CH₂)₃-Si(OCH₃)₃. Polysulfane der allgemeinen Formel II können auch Oligomere oder Polymere der Polysulfane der allgemeinen Formel II enthalten.

In einer bevorzugten Ausführungsform kann das Mercaptosilan der Formel I (C₁₃H₂₇-(OCH₂CH₂)₅-O-)₃ Si-(CH₂)₃-SH, (C₁₃H₂₇-(OCH₂CH₂)₅-O-)₂ (CH₃CH₂O-) Si-(CH₂)₃-SH, (C₁₃H₂₇-(OCH₂CH₂)₅-O-) (CH₃CH₂O-)₂ Si-(CH₂)₃-SH, oder Mischungen der vorher genannten Silane und das Polysulfan der allgemeinen Formel II (CH₃CH₂O)₃Si-(CH₂)₃-Sₓ-(CH₂)₃-Si(OCH₂CH₃)₃ sein.

Die Kautschukmischung kann das Silan der allgemeinen Formel I in Mengen von 0,1 bis 8 Gew.-Teile, bezogen auf 100 Gew.-Teile des eingesetzten Kautschuks, und die Mischung von Polysulfanen der Formel II in Mengen von 0,1 bis 8 Gew.-Teile, bezogen auf 100 Gew.-Teile des eingesetzten Kautschuks, enthalten.

Die Kautschukmischung kann mindestens einen Füllstoff enthalten.

Als Füllstoffe können für die erfindungsgemäßen Kautschukmischungen die folgenden Füllstoffe eingesetzt werden:
- Ruße: Die hierbei zu verwendenden Ruße können nach dem Flammruß-, Furnace-, Gasruß oder Thermalruß-Verfahren hergestellt werden. Die Ruße können eine BET-Oberfläche von 20 bis 200 m²/g haben. Die Ruße können gegebenenfalls auch dotiert sein, wie zum Beispiel mit Si.
- Amorphe Kieselsäuren, vorzugsweise gefällte Kieselsäuren oder pyrogene Kieselsäuren. Die amorphen Kieselsäuren können eine spezifische Oberfläche von 5 bis 1000 m²/g, vorzugsweise 20 bis 400 m²/g (BET-Oberfläche) und eine Primärteilchengröße von 10 bis 400 nm haben. Die Kieselsäuren können gegebenenfalls auch als Mischoxide mit anderen Metalloxiden, wie AI-, Mg-, Ca-, Ba-, Zn- und Titanoxiden, vorliegen.
- Synthetische Silikate, wie Aluminiumsilikat oder Erdalkalisilikate, beispielsweise Magnesiumsilikat oder Calciumsilikat. Die synthetischen Silikate mit BET-Oberflächen von 20 bis 400 m²/g und Primärteilchendurchmessern von 10 bis 400 nm.
- Synthetische oder natürliche Aluminiumoxide und -hydroxide.
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, besonders bevorzugt gefällte Kieselsäuren oder Silikate, insbesondere bevorzugt gefällte Kieselsäuren mit einer BET-Oberflächen von 20 bis 400 m²/g in Mengen von 5 bis 180 Gew.-Teilen, jeweils bezogen auf 100 Gew.-Teile Kautschuk, eingesetzt werden.

Die erfindungsgemäßen Kautschukmischungen können Naturkautschuk und/oder Synthesekautschuke enthalten. Bevorzugte Synthesekautschuke sind beispielsweise bei W. Hofmann, Kautschuktechnologie, Genter Verlag, Stuttgart 1980, beschrieben. Sie umfassen unter anderem
- Polybutadien (BR),
- Polyisopren (IR),
- Styrol/Butadien-Copolymerisate, beispielsweise Emulsions-SBR (E-SBR) oder Lösungs-SBR (L-SBR), vorzugsweise mit einem Styrolgehalt von 1 bis 60 Gew.-%, besonders bevorzugt 2 bis 50 Gew.-%, bezogen auf das Gesamtpolymer,
- Chloropren (CR),
- Isobutylen/Isopren-Copolymerisate (IIR),
- Butadien/Acrylnitril-Copolymere, vorzugsweise mit einem Acrylnitrilgehalt von 5 bis 60 Gew.-%, vorzugsweise 10 bis 50 Gew.-%, bezogen auf das Gesamtpolymer (NBR),
- teilhydrierter oder vollständig hydrierter NBR-Kautschuk (HNBR),
- Ethylen/Propylen/Dien-Copolymerisate (EPDM) oder
- oben genannte Kautschuke, die zusätzlich funktionelle Gruppen besitzen, wie z.B. Carboxy-, Silanol- oder Epoxygruppen, beispielsweise Epoxidierter NR, Carboxyfunktionalisierter NBR oder Silanol- (-SiOH) bzw. Siloxy-funktionalisierter (-Si-OR), Amino- Epoxy-, Mercapto-, Hydroxy-funktionalisierte SBR,
sowie Mischungen dieser Kautschuke. Für die Herstellung von PKW-Reifenlaufflächen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Kautschukmischungen die mercaptomodifizierte S-SBR und Polysulfane der allgemeinen Formel II enthalten, können auch ohne Zusatz von Silanen der allgemeinen Formel I zu einer Verbesserung der Verarbeitbarkeit führen.

Die erfindungsgemäßen Kautschukmischungen können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Harze, Tackifier, Treibmittel, Farbstoffe, Pigmente, Wachse, Streckmittel, organische Säuren, Verzögerer, Metalloxide sowie Aktivatoren, wie Diphenylguanidin, Triethanolamin, Polyethylenglykol, Alkoxyterminiertes Polyethylenglykol Alkyl-O-(CH₂-CH₂-O)_{yl}-H mit y^{l} = 2-25, bevorzugt y^{l}=2-15, besonders bevorzugt y^{l}=3-10, ganz besonders bevorzugt y^{l}=3-6, oder Hexantriol, die der Kautschukindustrie bekannt sind.

Die Kautschukhilfsmittel können in bekannten Mengen, die sich unter anderem nach dem Verwendungszweck richten, eingesetzt werden. Übliche Mengen können zum Beispiel Mengen von 0,1 bis 50 Gew.-Teile, bezogen auf 100 Gew.-Teile Kautschuk, sein. Als Vernetzer können Peroxide, Schwefel oder schwefelspendende Substanzen eingesetzt werden. Die erfindungsgemäßen Kautschukmischungen können darüber hinaus Vulkanisationsbeschleuniger enthalten. Beispiele für geeignete Vulkanisationsbeschleuniger können Mercaptobenzthiazole, Sulfenamide, Thiurame, Dithiocarbamate, Thioharnstoffe und Thiocarbonate sein. Die Vulkanisationsbeschleuniger und Schwefel können in Mengen von 0,1 bis 10 Gew.-Teile, bevorzugt 0,1 bis 5 Gew.-Teile, bezogen auf 100 Gew.-Teile Kautschuk, eingesetzt werden.

Ein weiterer Gegenstand der Erfindung ist ein Verfahren zur Herstellung der erfindungsgemäßen Kautschukmischungen, welches dadurch gekennzeichnet ist, dass man mindestens einen Kautschuk, mindestens ein Mercaptosilan der allgemeinen Formel I,

R¹₃Si-R²-S-R³ I,

und mindestens eine Mischung von Polysulfanen der Formel II

R¹₃Si-R²-Sₓ-R²-SiR¹₃ II

mischt, wobei R¹, R², R³ und x die oben genannte Bedeutung haben.

Die Zugabe des Mercaptosilans der allgemeinen Formel I und der Mischung von Polysulfanen der Formel II, sowie die Zugabe der Füllstoffe kann bei Massetemperaturen von 100 bis 200 °C erfolgen. Sie kann jedoch auch bei tieferen Temperaturen von 40 bis 100 °C, zum Beispiel auch, aber nicht einschränkend, zusammen mit weiteren Kautschukhilfsmitteln, erfolgen.

Das Mercaptosilan der allgemeinen Formel I und die Mischung von Polysulfanen der Formel II können einzeln oder vorgemischt in die Kautschukmischung gegeben werden.

Das Mercaptosilan der Formel I kann sowohl in reiner Form als auch aufgezogen auf einen inerten organischen oder anorganischen Träger, sowie vorreagiert mit einem organischen oder anorganischen Träger dem Mischprozeß zugegeben werden.

Die Mischung von Polysulfanen der Formel II kann sowohl in reiner Form als auch aufgezogen auf einen inerten organischen oder anorganischen Träger, sowie vorreagiert mit einem organischen oder anorganischen Träger dem Mischprozeß zugegeben werden.

Bevorzugte Trägermaterialien können gefällte oder pyrogene Kieselsäuren, Wachse, Thermoplaste, natürliche oder synthetische Silikate, natürliche oder synthetische Oxide, bevorzugt Aluminiumoxid, oder Ruße sein. Desweiteren können die Silane auch vorreagiert mit dem einzusetzenden Füllstoff dem Mischprozeß zugegeben werden.

Die erfindungsgemäßen Kautschukmischungen können bei Temperaturen von 100 bis 200 °C, bevorzugt 120 bis 180 °C, gegebenenfalls unter Druck von 10 bis 200 bar vulkanisiert werden.

Die Abmischung der Kautschuke mit dem Füllstoff, gegebenenfalls Kautschukhilfsmitteln und den Silanen kann in bekannten Mischaggregaten, wie Walzen, Innenmischern und Mischextrudern, durchgeführt werden.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen, verwendet werden.

Die erfindungsgemäßen Kautschukmischungen können ohne Zusatz von Guanidinen hergestellt werden. In einer bevorzugten Ausführungsform kann die Kautschukmischung frei von Guanidinderivaten, vorzugsweise Diphenylguanidin, sein.

Die erfindungsgemäßen Kautschukmischungen haben den Vorteil, dass diese bessere dynamische Eigenschaften und Abriebwiderstand aufweisen.

### Beispiele

### Bestimmung der Schwefelkettenverteilung/-länge

Analytische Trennungen der Schwefelverbindungen und die Bestimmung der Schwefelkettenlänge wurden an einer analytischen HPLC-Anlage Series 1260 Infinity II der Firma Agilent Technologies durchgeführt.

Säule: Bakerbond C18 (RP), 5 µm, 4,6 × 250 mm, Fließrate 1,50 ml/min, λ = 254 nm, Säulentemperatur 30°C, mobile Phase: Mischung aus 180 ml Tetrabutylammoniumbromid-Lösung (hergestellt aus 400 mg Tetrabutylammoniumbromid in 1 I VE-Wasser), 450 ml Ethanol und 1370 ml Methanol.

### Beispiel 1: Herstellung von Bis(triethoxysilylpropyl)disulfid

Natriumcarbonat (46,0 g, 1,15 äquivalent), Natriumhydrogensulfid (30,9 g, 1,04 äquivalent, 71%ig), und VE-Wasser (170 g) werden auf 72°C erhitzt. Die Reaktionsmischung wird für 10 min bei 72°C gerührt. Anschließend wird Schwefel (12,1 g, 1,01 äquivalent) hinzugegeben und die Reaktionsmischung für 45 min bei 72°C gerührt. Tetra-n-butylphosphoniumbromid (3,07 g, 0,01 äquivalent, 50%ig in Wasser) und (3-Chlorpropyl)triethoxysilan (181 g, 2,00 äquivalent) werden anschließend nacheinander zur Reaktionsmischung gegeben und bis zum vollständigen Umsatz bei 75°C gerührt. Nach Reaktionsende wird VE-Wasser hinzugegeben und eine Phasentrennung durchgeführt. Die organische Phase wird über MgSO₄ getrocknet und das Produkt als hellgelbe Flüssigkeit (η = 90%) isoliert.

S2-Gehalt: 93,6 Gew.-%, S3-Gehalt: 6,1 Gew.-%, S4-Gehalt: 0,2 Gew.-%, S5-Gehalt: 0,0 Gew.-%, S6-Gehalt: 0,0 Gew.-%, S7-Gehalt: 0,0 Gew.-%, S8-Gehalt: 0,0 Gew.-%, S9-Gehalt: 0,0 Gew.-%, S10-Gehalt: 0,0 Gew.-%, mittlere Schwefelkettenlänge 2,06.

### Beispiel 2: Herstellung von Bis(triethoxysilylpropyl)disulfid

Natrium (41,0 g, 2,1 äquivalent) wird portionsweise zu Ethanol (634 g, 16,2 äquivalent) bei Raumtemperatur unter Stickstoffatmosphäre in einem Druckreaktor hinzugegeben. Die Reaktionsmischung wird für 19 h bei Raumtemperatur gerührt. Schwefelwasserstoff (40,6 g, 1,4 äquivalent) wird danach bei einer Temperatur von 45-60°C und einem Druck von 0,5-1,5 bar zu dosiert und die Reaktionsmischung für 30 min gerührt. Anschließend wird Schwefel (27,3 g, 1,0 äquivalent) bei 60°C hinzugegeben. Nach 30 min Rühren bei 60°C wird (3-Chlorpropyl)triethoxysilan (409 g, 2,0 äquivalent) bei einer Temperatur von 60-75°C und einem Druck von 0,5-0,8 bar zu dosiert. Die Suspension wird bei 80°C und 0,8-2,0 bar bis zum vollständigen Umsatz weiter gerührt. Danach wird die Reaktionsmischung auf Raumtemperatur abgekühlt, die Suspension gefiltert, das Filtrat unter verminderten Druck eingeengt und das Produkt im Vakuum getrocknet. Das Produkt wird als hellgelbe Flüssigkeit (η = 88%) isoliert.

S2-Gehalt: 93,4 Gew.-%, S3-Gehalt: 6,4 Gew.-%, S4-Gehalt: 0,2 Gew.-%, S5-Gehalt: 0,0 Gew.-%, S6-Gehalt: 0,0 Gew.-%, S7-Gehalt: 0,0 Gew.-%, S8-Gehalt: 0,0 Gew.-%, S9-Gehalt: 0,0 Gew.-%, S10-Gehalt: 0,0 Gew.-%, mittlere Schwefelkettenlänge 2,06.

### Beispiel 3: Gummitechnische Untersuchungen

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks.

**Tabelle 1**

| Name | Kautschukmischung 1 (Ref.) | Kautschukmischung 2 (Ref.) | Kautschukmischung 3 (erfindungsgem.) |
|---|---|---|---|
| 1.Stufe | phr | phr | phr |
| Buna VSL 4526-2 | 96,25 | 96,25 | 96,25 |
| Buna CB 24 | 30,00 | 30,00 | 30,00 |
| ULTRASIL^{®} 7000 GR | 80,00 | 80,00 | 80,00 |
| Si 363^{™} | 9,00 | 6,90 | 6,90 |
| Si 266^{®} | -- | 2,80 | -- |
| Beispiel 1 | -- | -- | 2,80 |
| CORAX^{®} N330 | 5,00 | 5,00 | 5,00 |
| ZnO RS RAL 844 C | 2,00 | 2,00 | 2,00 |
| Edenor ST1 GS | 2,00 | 2,00 | 2,00 |
| Vivatec 500 | 8,75 | 8,75 | 8,75 |
| Vulkanox^{®} HS/LG | 1,50 | 1,50 | 1,50 |
| Vulkanox^{®} 4020/LG | 2,00 | 2,00 | 2,00 |
| Protektor G 3108 | 2,00 | 2,00 | 2,00 |
| | | | |
| 2.Stufe | | | |
| Batch 1.Stufe | | | |
| | | | |
| 3.Stufe | | | |
| Batch 2.Stufe | | | |
| Richon TBZTD-OP | 0,40 | 0,40 | 0,40 |
| Vulkacit CZ/EG-C | 1,60 | 1,60 | 1,60 |
| Schwefel 80/90 | 2,00 | 2,00 | 2,00 |

Verwendete Substanzen:
a) Buna VSL 4526-2: Buna^{®} VSL 4526-2 HM ist ein Lösungs-Styrol-Butadienkautschuk der mit 37,5 phr TDAE-Öl verstreckt wird; Mooney (1+4 @ 100 °C): 62 ME; Vinyl: 44,5 %; Styrol : 26 % der Firma ARLANXEO Deutschland GmbH
b) Buna CB 24: Buna^{®} CB 24 (cis-1,4 > 96 %); neodymkatalysierter Butadienkautschuk;
   Mooney (1+4 @100°C): 44 ME der Firma ARLANXEO Deutschland GmbH
c) Kieselsäure: ULTRASIL^{®} 7000 GR der Firma Evonik Resource Efficiency GmbH (leicht dispergierbare gefällte Kieselsäure, BET-Oberfläche = 170 m²/g, CTAB-Oberfläche = 160 m²/g).
d) Si 266^{®}: Bis(triethoxysilylpropyl)disulfide der Firma Evonik Resource Efficiency GmbH S2-Gehalt: 84,5 Gew.-%, S3-Gehalt: 14,4 Gew.-%, S4-Gehalt: 1,1 Gew.-%, S5-Gehalt: 0,1 Gew.-%, S6-Gehalt: 0,0 Gew.-%, S7-Gehalt: 0,0 Gew.-%, S8-Gehalt: 0,0 Gew.-%, S9-Gehalt: 0,0 Gew.-%, S10-Gehalt: 0,0 Gew.-%, mittlere Schwefelkettenlänge 2,16.
e) 4-((3,6,9,12,15-Pentaoxaoctacosyl)oxy)-4-ethoxy-5,8,11,14,17,20-hexaoxa-4-silatritriacontan-1-thiol, beispielsweise Si 363^{™}: Mercaptosilan der Firma Evonik Resource Efficiency GmbH.
f) Corax^{®} N 330: Ruß der Firma Orion Engineered Carbons GmbH.
g) ZnO: Zinkoxid ZnO RS RAL 844 C der Firma Arnsperger Chemikalien GmbH.
h) EDENOR ST1 GS, Stearinsäure der Firma Caldic Deutschland GmbH.
i) Vivatec 500: TDAE der H&R GmbH Co. KGaA.
j) Vulkanox^{®} 4020/LG: *N*-(1,3-dimethylbutyl)-*N*'-phenyl-p-phenylene diamine (6PPD) der Firma LANXESS Deutschland GmbH.
k) Vulkanox^{®} HS/LG: polymeres 2,2,4-trimethyl-1,2-dihydroquinoline (TMQ), der Firma LANXESS Deutschland GmbH.
l) Protektor G 3109: Wachs der Firma Paramelt B.V. Niederlande.
m) Richon TBZTD-OP: Tetrabenzylthiuram disulfid (TBzTD) der Firma Weber & Schaer GmbH & Co. KG (Hersteller: Dalian Richon).
n) Vulkacit^{®} CZ/EG-C: *N*-Cyclohexyl-2-benzothiazolsulfenamid der Firma LANXESS Deutschland GmbH.
o) Schwefel 80/90: Mahlschwefel 80/90° der Firma Azelis Deutschland GmbH.

Die Mischungen werden dreistufig in einem 1,5 l Innenmischer gemäß der in Tabelle 2 beschriebenen Mischvorschrift hergestellt.

**Tabelle 2**

| Stufe 1 | |
|---|---|
| Einstellungen | |
| Mischaggregat | HF Mixing Group GmbH; Typ GK 1,5 N |
| Füllgrad | 0,73 |
| Drehzahl | 70 min⁻¹ |
| Stempeldruck | 5,5 bar |
| Durchflußtemp. | 70 °C |
| Mischvorgang | |
| 0 bis 0,5 min | Kautschuke |
| 0,5 bis 1,0 min | Vulkanox^{®} HS; Vulkanox^{®} 4020 |
| 1,0 bis 2,0 min | ½ Kieselsäure, Si 363^{™} |
| 2,0 min | Säubern |
| 2,0 bis 3,0 min | a) CORAX^{®} N330, TDAE |
| | b) ½ Kieselsäure, Si 266^{®} bzw. Beispiel 1 |
| | c) Protektor G 3108 |
| 3,0 bis 5,0 min | ZnO, Stearinsäure; Mischen bei 150 °C, Temperatur ggfs. über Drehzahlvariation einstellen |
| 5,0 min | Batch auswerfen und Gewicht überprüfen auf Labormischwalzwerk 45 s ein Fell bilden (Laborwalzwerk: Durchmesser 250 mm, Länge 190 mm, Walzenspalt 4 mm, Durchflußtemperatur 60 °C) 24 h Lagerung bei Raumtemperatur |

| Stufe 2 | |
|---|---|
| Einstellungen | |
| Mischaggregat | wie in Stufe 1 bis auf |
| Füllgrad | 0,70 |
| Durchflußtemp. | 80 °C |
| Mischvorgang | Batchtemperatur 145-155°C |
| 0 bis 1,0 min | Batch Stufe 1 aufbrechen |
| 1,0 bis 3,0 min | DPG; Mischen bei 150 °C, Temperatur ggfs. über Drehzahlvariation einstellen |
| 3,0 min | Batch auswerfen und auf Labormischwalzwerk 45 s ein Fell bilden (Laborwalzwerk: Durchmesser 250 mm, Länge 190 mm, Walzenspalt 4 mm, Durchflußtemperatur 60 °C) 24 h Lagerung bei Raumtemperatur |
| | |

| Stufe 3 | |
|---|---|
| Einstellungen | |
| Mischaggregat | wie in Stufe 1 bis auf |
| Füllgrad | 0,68 |
| Drehzahl | 55 min⁻¹ |
| Durchflußtemp. | 50 °C |
| Mischvorgang | Batchtemperatur < 110°C |
| 0 bis 2,0 min | Batch Stufe 2 aufbrechen, Beschleuniger und Schwefel |
| 2,0 min | Batch auswerfen und auf Labormischwalzwerk 20 s ein Fell bilden mit Walzenspalt 3-4 mm, einschneiden 3xlinks, 3xrechts mit Walzenspalt 3 mm, 3x durch Walzenspalt 3 mm, 12-24 h Lagerung bei Raumtemperatur (Laborwalzwerk: Durchmesser 250 mm, Länge 190 mm, , Durchflußtemperatur 80°C) |

Die Vulkanisation erfolgt bei einer Temperatur von 165 °C in einer typischen Vulkanisationspresse mit einem Haltedruck von 120 bar. Die notwendige Vulkanisationszeit wird zuvor mittels Moving Die Rheometer (rotorloses Vulkameter) nach ISO 6502 (Absatz 3.2 "rotorless curemeter") bei 165 °C bestimmt (siehe Tabelle 4).

Die gummitechnische Prüfung erfolgt gemäß den in Tabelle 3 angegebenen Prüfmethoden.

**Tabelle 3**

| Test / Verfahren | Rohmischung (R) Vulkanisat (V) | Physikalische Größe | Testbedingungen | | Norm |
|---|---|---|---|---|---|
| Mooney Viskosität | R | ML 1+4/ME | bei 100 °C | | DIN 53523/3, ISO 667 |
| Anvulkanisationsverhalten / Scorch | R | Anvulkanisationszeit t₅ / min | bei 130 °C | | DIN 53523/4, ISO 667 |
| Anvulkanisationsverhalten / Scorch | R | Anvulkanisationszeit t₃₅ / min | bei 130 °C | | DIN 53523/4, ISO 667 |
| Vulkameterprüfung; Rheometer MDR | R | 110 % / min | bei 165 °C; 0,5 ° | | DIN 53529/3, ISO 6502 |
| Vulkameterprüfung; Rheometer MDR | R | t 20 % / min | bei 165 °C; 0,5 ° | | DIN 53529/3, ISO 6502 |
| Vulkameterprüfung; Rheometer MDR | R | t 90 % / min | bei 165 °C; 0,5 ° | | DIN 53529/3, ISO 6502 |
| Vulkameterprüfung; Rheometer MDR | R | (t 80 % - t 20 %) / min | bei 165 °C; 0,5 ° | | |
| Zugversuch | V | Spannungswert 300 % / MPa | bei 23°C: Normstab S 1 | | ISO 37 |
| Shore A Härte | V | | bei 23 °C | | ISO 7619-1 |
| Ball Rebound | V | Rückprallelastizität / % | Fallhöhe 500 mm, Stahlkugel mit d = 19 mm, 28 g | | DIN EN ISO 8307 |
| Viskoelastische Eigenschaften | V | | bei 60°C "Operators Manual RPA 2000" von Alpha Technologies, February 1997 | | |
| Viskoelastische Eigenschaften | V | Komplexer Modul E* / MPa | 16 Hz, 50 N Vorkraft und 25 N Amplitudenkraft, 5 min Temperierzeit, Meßwertaufnahme nach 30 s Prüfzeit | | ISO 4664-1 |
| | V | Verlustfaktor tan δ / -- | | | ISO 4664-1 |
| Abriebwiderstand | V | Pro Mischung und Prüfbedingung: Gemittelter Masseverlust/ Laufstrecke, | Folgende Einstellungen wurden zur Prüfung gewählt: | | ISO 23 233 |
| | | Pro Mischung: gemittelter prozentualer Abriebwiderstands index, prozentualer Abriebwiderstands index für Low Severity und High Severity | Slip angle degrees | Rotational speed km/h | |
| | | | 16 | 25 | |
| | | | 16 | 12 | |
| | | | 13 | 2,5 | |
| | | | 9 | 25 | |
| | | | 9 | 12 | |
| | | | 9 | 2,5 | |
| | | | 5,5 | 25 | |
| | | | 5,5 | 12 | |
| | | | 5,5 | 2,5 | |
| | | | 5,5 | 2,5 | |
| | | | 5,5 | 12 | |
| | | | 5,5 | 25 | |
| | | | 9 | 2,5 | |
| | | | 9 | 12 | |
| | | | 9 | 25 | |
| | | | 13 | 2,5 | |
| | | | 16 | 12 | |
| | | | 16 | 25 | |
| LAT Naßrutschverhalten | V | Pro Mischung und Prüfbedingung: gemittelter Seitenkraftkoeffezi ent | Slip angle degrees | Rotational speed km/h | |
| | | | 15 | 1,5 | |
| | | | 15 | 1,5 | |
| | | | 15 | 1,5 | |
| | | Pro Mischung: prozentualer Nassrutschindex für verschiedene Prüfbedingung unter Berücksichtigung von T_{G} nach WLF | 15 | 1,5 | |
| | | | 15 | 1,5 | |
| | | | 15 | 1,5 | |
| | | | 15 | 1,5 | |

In der Tabelle 4 sind die gummitechnischen Daten für die Rohmischungen und Vulkanisate angegeben.

**Tabelle 4**

| | Einheit | Kautschukmischung 1 (Ref.) | Kautschukmischung 2 (Ref.) | erfindungsgemäße Kautschukmischung 3 |
|---|---|---|---|---|
| ML(1+4) at 100 °C; nach der 1. Mischstufe | ME | Zu hoch = außerhalb des Meßbereichs | 142 | 144 |
| ML(1+4) at 100 °C; nach der 2. Mischstufe | ME | 104 | 89 | 92 |
| ML(1+4) at 100 °C; nach der 3. Mischstufe | ME | 63 | 59 | 60 |
| Mooney Scorch t5 @ 130 °C | min | 12,3 | 27,0 | 24,6 |
| Mooney Scorch t35 @ 130 °C | min | 15,0 | 31,6 | 28,8 |
| MDR: 165 °C; 0.5° | | | | |
| t 10 % | min | 1,1 | 1,5 | 1,8 |
| t 20 % | min | 1,5 | 2,5 | 2,4 |
| t 90 % | min | 3,7 | 5,8 | 5,7 |
| t 80 % - t 20 % | min | 1,5 | 2,1 | 2,0 |
| Vulkanisationszeit (165 °C) | min | 8 | 12 | 12 |
| Zugfestigkeit (6 Stäbe S1, 23 °C) | MPa | 13,6 | 15,0 | 15,7 |
| Modul 300 % | MPa | 9,8 | 9,7 | 10,6 |
| Modul 300 % / 100 % | - | 5,4 | 5,4 | 5,6 |
| Ball-Rebound, 60 °C | % | 70,4 | 66,7 | 69,4 |
| Zwick, 16 Hz, 50 N +/- 25 N | | | | |
| tan δ, 60 °C | - | 0,088 | 0,095 | 0,089 |
| RPA: 2nd strain sweep vulcanizate 1,6 Hz, 60 °C, 0,28 % - 100 % | | | | |
| tan δ (max) | - | 0,120 | 0,141 | 0,125 |
| LAT Abriebwiderstand Rating | % | 100 | 99 | 104 |
| LAT Naßrutschen Rating @ 2 °C | % | 100 | 102 | 102 |
| LAT Naßrutschen Rating @ 10 °C | % | 100 | 102 | 102 |
| LAT Naßrutschen Rating @ 18 °C | % | 100 | 102 | 102 |

Es ist bekannt, dass ein Disulfidsilan wie Si 266^{®} die Verarbeitbarkeit des Mercaptosilans Si 363^{™} verbessern kann.

Dies zeigt der Vergleich der Si 266^{®} enthaltenden Kautschukmischung 2 gegenüber der Si 363^{™} enthaltenden Kautschukmischung 1 durch abgesenkte Mooney Viskositäten in den Mischstufen 1-3. Auch die Mooney Scorch Werte können vorteilhafter Weise verlängert werden, was sich durch die verlängerte t 10 % Zeit im MDR bestätigt.

Diese Vorteile können auch bei der Verwendung der Mischung von Polysulfanen der Formel (II), bei denen x=2 einen Wert von mindestens 90 Gew.-% hat, (erfindungsgemäße Kautschukmischung 3) erzielt werden. In dieser Mischung ist die t 10 % Zeit überraschender Weise sogar noch einmal verlängert.

Während die Kautschukmischung 2 einen gegenüber der Kautschukmischung 1 gleichwertigen Verstärkungsindex (Spannungswert 300 % / Spannungswert 100 %) aufweist, ist dieses Verhältnis für die erfindungsgemäße Kautschukmischung verbessert. Auch die ultimative Zugfestigkeit kann nochmals gegenüber der Kautschukmischung 2 gesteigert werden.

Während bei der Kautschukmischung 2 die Vorteile in der Verarbeitbarkeit mit Einbußen in den Hystereseverlusten bei dynamischer Belastung einhergehen, werden diese Eigenschaften in drei voneinander unabhängigen dynamischen Tests unter Anwendung verschiedenen Belastungsarten (Ball Rebound (energiegeregelte Messung), Zwick (kraftgeregelte Messung) und im RPA (weggeregelte Messung)) in der erfindungsgemäßen Kautschukmischung 3 wieder annähernd auf das Niveau der Kautschukmischung 1 gebracht. Dadurch läßt sich der Rollwiderstand und damit der Kraftstoffverbrauch eines Kraftfahrzeugs, das mit Reifen ausgestattet ist, die die erfindungsgemäße Kautschukmischung als Reifenlaufflächencompound verwenden, deutlich absenken.

Überraschender Weise wird neben der schon mit der Kautschukmischung 2 erzielten verbesserten Nassrutschfestigkeit gegenüber der Kautschukmischung I, auch noch eine deutliche Verbesserung des Abriebwiderstand auf dem Laboratory Abrasion Tester LAT (System Grosch) gefunden.

Somit läßt sich mit der erfindungsgemäßen Kautschukmischung ein in der Verarbeitung und in den wichtigsten gummitechnischen Eigenschaften eine gegenüber den beiden Referenzmischungen deutlich gesteigerte Gesamtperformance erzielen.

## Patentansprüche

1. Kautschukmischungen, **dadurch gekennzeichnet, dass** diese mindestens einen Kautschuk, mindestens ein Mercaptosilan der allgemeinen Formel I,
R¹₃Si-R²-S-R³ I,
und mindestens eine Mischung von Polysulfanen der Formel II
R¹₃Si-R²-Sₓ-R²-SiR¹₃ II
enhalten,
wobei R¹ gleich oder verschieden und eine Alkylpolyethergruppe -O-(R⁴-O)ₘ-R⁵, C1-C12-Alkyl- oder R⁶O-Gruppe sind,
R² gleich oder verschieden und eine verzweigte oder unverzweigte, gesättigte oder ungesättigte, aliphatische, aromatische oder gemischt aliphatische /aromatische zweibindige C1-C30 Kohlenwasserstoffgruppe sind,
R³ gleich H, CN oder (C=O)-R⁷ ist,
R⁴ gleich oder verschieden, eine verzweigte oder unverzweigte aliphatische zweibindige C1-C30 Kohlenwasserstoffgruppe sind,
m 1 bis 30 ist,
R⁵ aus mindestens 1 C-Atomen besteht und eine unsubstituierte oder substituierte, verzweigte oder unverzweigte einbindige Alkyl-, Alkenyl, Aryl oder Aralkylgruppe ist,
R⁶ gleich H, C1-C30 verzweigten oder unverzweigten einbindigen Alkyl-, Alkenyl-, Aryloder Aralkylgruppe ist,
R⁷ gleich C1-C30 verzweigten oder unverzweigten einbindigen Alkyl-, Alkenyl-, Aryloder Aralkylgruppe ist,
und
x eine ganze Zahl von 2 bis 10 ist, den Anteil der Polysulfanen bei denen x=2 ist einen Wert von mindestens 90 Gew.-%, bezogen auf die Gesamtmenge der Polysulfane mit x=2 bis 10, erreicht.

2. Kautschukmischungen gemäß Anspruch 1, **dadurch gekennzeichnet, dass** R¹ gleich oder verschieden und Methoxygruppen, Ethoxygruppen oder Alkylpolyethergruppen -O-(R⁴-O)ₘ-R⁵ sind und mindestens eine R¹ Gruppe des Mercaptosilan der allgemeinen Formel I eine Alkylpolyethergruppe -O-(R⁴-O)ₘ-R⁵ ist, R² CH₂CH₂CH₂ sind, R³ H ist.

3. Kautschukmischungen gemäß Anspruch 2, **dadurch gekennzeichnet, dass** R¹ gleich oder verschieden und Ethoxygruppen oder Alkylpolyethergruppen -O-(R⁴-O)ₘ-R⁵ sind und mindestens eine R¹ Gruppe des Mercaptosilan der allgemeinen Formel I eine Alkylpolyethergruppe -O-(R⁴-O)ₘ-R⁵ ist und die R¹ Gruppen des Polysulfan der allgemeinen Formel II Ethoxygruppen sind.

4. Kautschukmischungen gemäß Anspruch 1, **dadurch gekennzeichnet, dass** das Mercaptosilan der allgemeinen Formel I (C₁₃H₂₇-(OCH₂CH₂)₅-O-)₃ Si-(CH₂)₃-SH, (C₁₃H₂₇-(OCH₂CH₂)₅-O-)₂ (CH₃CH₂O-) Si-(CH2)3-SH, (C₁₃H₂₇-(OCH₂CH₂)₅-O-) (CH₃CH₂O-)₂ Si-(CH₂)₃-SH oder (CH₃CH₂O-)₃ Si-(CH₂)₃-SH ist.

5. Kautschukmischungen gemäß Anspruch 1, **dadurch gekennzeichnet, dass** das Polysulfan der allgemeinen Formel II (CH₃CH₂O)₃Si-(CH₂)₃-Sₓ-(CH₂)₃-Si(OCH₂CH₃)₃ ist.

6. Kautschukmischungen gemäß Anspruch 1, **dadurch gekennzeichnet, dass** diese Füllstoff und gegebenenfalls weitere Kautschukhilfsmittel enthalten.

7. Kautschukmischungen gemäß Anspruch 1, **dadurch gekennzeichnet, dass** das Mercaptosilan der allgemeinen Formel I in Mengen von 0,1 bis 8 Gew.-Teile, bezogen auf 100 Gew.-Teile des eingesetzten Kautschuks, und die Mischung von Polysulfanen der Formel II in Mengen von 0,1 bis 8 Gew.-Teile, bezogen auf 100 Gew.-Teile des eingesetzten Kautschuks, enthalten sind.

8. Verfahren zur Herstellung der Kautschukmischungen gemäß Anspruch 1, **dadurch gekennzeichnet, dass** man mindestens einen Kautschuk, mindestens ein Mercaptosilan der allgemeinen Formel I und mindestens eine Mischung von Polysulfanen der Formel II mischt.

9. Verwendung von Kautschukmischungen gemäß Anspruch 1 zur Herstellung von Formkörpern.

10. Verwendung von Kautschukmischungen gemäß Anspruch 1 zur Herstellung von Luftreifen, Reifenlaufflächen, gummihaltigen Reifenbestandteilen, Kabelmänteln, Schläuchen, Treibriemen, Förderbändern, Walzenbelägen, Reifen, Schuhsohlen, Dichtungsringen und Dämpfungselementen.

## Claims

1. Rubber mixtures, **characterized in that** they comprise at least one rubber, at least one mercaptosilane of the general formula I
R¹₃Si-R²-S-R³ I
and at least one mixture of polysulfanes of the formula II
R¹₃Si-R²-Sₓ-R²-SiR¹₃ II
where R¹ are the same or different and are an alkyl polyether group -O-(R⁴-O)ₘ-R⁵,
C1-C12-alkyl- or R⁶O- group,
R² are the same or different and are a branched or unbranched, saturated or unsaturated, aliphatic, aromatic or mixed aliphatic/aromatic divalent C1-C30 hydrocarbon group,
R³ is H, CN or (C=O) -R⁷,
R⁴ are the same or different and are a branched or unbranched aliphatic divalent C1-C30 hydrocarbon group, m is 1 to 30,
R⁵ consists of at least 1 carbon atom and is an unsubstituted or substituted, branched or unbranched monovalent alkyl, alkenyl, aryl or aralkyl group,
R⁶ is H, C1-C30 branched or unbranched monovalent alkyl, alkenyl, aryl or aralkyl group,
R⁷ is C1-C30 branched or unbranched monovalent alkyl, alkenyl, aryl or aralkyl group,
and
x is an integer from 2 to 10, the proportion of polysulfanes in which x = 2 reaches a value of at least 90% by weight, based on the total amount of polysulfanes with x = 2 to 10.

2. Rubber mixtures according to Claim 1, **characterized in that** R¹ are the same or different and are methoxy groups, ethoxy groups or alkyl polyether groups -O-(R⁴-O)ₘ-R⁵ and at least one R¹ group in the mercaptosilane of the general formula I is an alkyl polyether group -O-(R⁴-O)ₘ-R⁵, R² are CH₂CH₂CH₂, R³ is H.

3. Rubber mixtures according to Claim 2, **characterized in that** R¹ are the same or different and are ethoxy groups or alkyl polyether groups -O-(R⁴-O)ₘ-R⁵ and at least one R¹ group in the mercaptosilane of the general formula I is an alkyl polyether group -O-(R⁴-O)ₘ-R⁵ and the R¹ groups of the polysulfane of the general formula II are ethoxy groups.

4. Rubber mixtures according to Claim 1, **characterized in that** the mercaptosilane of the general formula I is (C₁₃H₂₇-(OCH₂CH₂)₅-O-)₃Si-(CH₂)₃-SH, (C₁₃H₂₇-(OCH₂CH₂)₅-O-)₂ (CH₃CH₂O-) Si-(CH₂)₃-SH, (C₁₃H₂₇-(OCH₂CH₂)₅-O-)(CH₃CH₂O-) ₂ Si-(CH₂)₃-SH or (CH₃CH₂O-) ₃Si-(CH₂)₃-SH.

5. Rubber mixtures according to Claim 1, **characterized in that** the polysulfane of the general formula II is (CH₃CH₂O)3Si-(CH₂)₃-Sₓ-(CH₂)₃-Si(OCH₂CH₃)₃.

6. Rubber mixtures according to Claim 1, **characterized in that** they comprise filler and optionally further rubber auxiliaries.

7. Rubber mixtures according to Claim 1, **characterized in that** the mercaptosilane of the general formula I is present in amounts of 0.1 to 8 parts by weight, based on 100 parts by weight of the rubber used, and the mixture of polysulfanes of the formula II is present in amounts of 0.1 to 8 parts by weight, based on 100 parts by weight of the rubber used.

8. Process for producing the rubber mixtures according to Claim 1, **characterized in that** at least one rubber, at least one mercaptosilane of the general formula I and at least one mixture of polysulfanes of the formula II are mixed.

9. Use of rubber mixtures according to Claim 1 for producing moulded articles.

10. Use of rubber mixtures according to Claim 1 for producing pneumatic tyres, tyre treads, rubbercontaining tyre components, cable sheaths, hoses, drive belts, conveyor belts, roll coverings, tyres, footwear soles, gasket rings and damping elements.

## Revendications

1. Mélanges de caoutchoucs, **caractérisés en ce qu'**ils contiennent au moins un caoutchouc, au moins un mercaptosilane de Formule générale I
R¹₃Si-R²-S-R³ I,
et au moins un mélange de polysulfanes de Formule II
R¹₃Si-R²-Sₓ-R²-SiR¹₃ II
dans lesquelles
R¹ est identique ou différent et représente un groupe alkylpolyéther -O-(R⁴-O)ₘ-R⁵, un groupe alkyle en C1-C12 ou R⁶O,
R² est identique ou différent et représente un groupe hydrocarboné en C1-C30 divalent, ramifié ou non ramifié, saturé ou insaturé, aliphatique, aromatique ou en mélange aliphatique/aromatique,
R³ représente H, CN ou (C=O) -R⁷,
R⁴ est identique ou différent et représente un groupe hydrocarboné en C1-C30 divalent, ramifié ou non ramifié, aliphatique,
m représente 1 à 30,
R⁵ est constitué d'au moins un atome de carbone et représente un groupe alkyle, alcényle, aryle ou aralkyle monovalent, non substitué ou substitué, ramifié ou non ramifié,
R⁶ représente H, un groupe alkyle, alcényle, aryle ou aralkyle en C1-C30 monovalent, ramifié ou non ramifié, R⁷ représente un groupe alkyle, alcényle, aryle ou aralkyle en C1-C30 monovalent, ramifié ou non ramifié, et
x représente un nombre entier de 2 à 10, la proportion des polysulfanes pour lesquels x = 2 étant une valeur d'au moins 90 % en poids par rapport à la quantité totale des polysulfanes dans lesquels x = 2 à 10.

2. Mélanges de caoutchoucs selon la revendication 1, **caractérisés en ce que** R¹ est identique ou différent et représente un groupe méthoxy, un groupe éthoxy ou un groupe alkylpolyéther -O-(R⁴-O)ₘ-R⁵, et au moins un groupe R¹ du mercaptosilane de Formule générale I représente un groupe alkylpolyéther -O-(R⁴-O)ₘ-R⁵, R² représente CH₂CH₂CH₂, R³ représente H.

3. Mélanges de caoutchoucs selon la revendication 2, **caractérisés en ce que** R¹ est identique ou différent et représente un groupe éthoxy ou un groupe alkylpolyéther -O-(R⁴-O)ₘ-R⁵, et au moins un groupe R¹ du mercaptosilane de Formule générale I représente un groupe alkylpolyéther -O-(R⁴-O)ₘ-R⁵ et les groupes R¹ du polysulfane de Formule générale II représentent des groupes éthoxy.

4. Mélanges de caoutchoucs selon la revendication 1, **caractérisés en ce que** le mercaptosilane de Formule générale I est (C₁₃H₂₇-(OCH₂CH₂)₅-O-)₃Si- (CH₂)₃-SH, (C₁₃H₂₇-(OCH₂CH₂)₅-O-)₂(CH₃CH₂O-) Si-(CH₂)₃-SH, (C₁₃H₂₇-(OCH₂CH₂)₅-O-)(CH₃CH₂O-) ₂Si- (CH₂)₃-SH ou (CH₃CH₂O-) ₃Si-(CH₂)₃-SH.

5. Mélanges de caoutchoucs selon la revendication 1, **caractérisés en ce que** le polysulfane de Formule générale II est (CH₃CH₂O)₃Si-(CH₂)₃-Sₓ-(CH₂)₃-Si(OCH₂CH₃)₃.

6. Mélanges de caoutchoucs selon la revendication 1, **caractérisés en ce qu'**ils contiennent une charge et éventuellement d'autres adjuvants de caoutchouc.

7. Mélanges de caoutchoucs selon la revendication 1, **caractérisés en ce que** le mercaptosilane de Formule générale I est présent en des quantités de 0,1 à 8 parties en poids pour 100 parties en poids du caoutchouc utilisé, et le mélange de polysulfanes de Formule II est présent en des quantités de 0,1 à 8 parties en poids, pour 100 parties en poids du caoutchouc utilisé.

8. Procédé de fabrication de mélanges de caoutchoucs selon la revendication 1, **caractérisé en ce qu'**on mélange au moins un caoutchouc, au moins un mercaptosilane de Formule générale I et au moins un mélange de polysulfanes de Formule II.

9. Utilisation de mélanges de caoutchoucs selon la revendication 1 pour fabriquer des objets moulés.

10. Utilisation de mélanges de caoutchoucs selon la revendication 1 pour la fabrication de pneumatiques, de bandes de roulement de pneumatique, de constituants de pneumatiques contenant du caoutchouc, de gaines de câble, de tuyaux flexibles, de courroies d'entraînement, de bandes transporteuses, de revêtements de cylindre, de pneus, de semelles de chaussures, de bagues d'étanchéité et d'éléments d'amortissement.
